# EUROPEAN PATENT APPLICATION

(11) **EP 3 139 659 A1**
(43) Date of publication of application: **08.03.2017**
(21) Application number: 15786166.7
(22) Date of filing: 22.04.2015
(51) Int. Cl.: H04W 24/10, H04W 16/28

(54) **TERMINAL DEVICE AND INTEGRATED CIRCUIT**

(30) Priority: 28.04.2014 JP 2014092348
(71) Applicant: Sharp Kabushiki Kaisha, Sakai City, Osaka 590-8522 (JP)
(72) Inventor: YAMADA Ryota, Sakai City Osaka 590-8522 (JP); YOSHIMOTO Takashi, Sakai City Osaka 590-8522 (JP); SHIMEZAWA Kazuyuki, Sakai City Osaka 590-8522 (JP)
(74) Representative: Müller Hoffmann & Partner
(86) International application number: PCT/JP2015/062272
(87) International publication number: WO 2015/166861

(57) **Abstract**

Throughput is improved in a wireless environment in which various types of interference are caused. Included are a reception unit that assumes a first reference signal which corresponds to the base station apparatus and a second reference signal which is based on interference information that is configured by the base station apparatus, a channel state information generation unit that generates first channel state information which is based on at least the first reference signal and second channel state information which is based on at least the second reference signal; and a transmission unit that transmits the first channel state information and the second channel state information to the base station apparatus.

## Description

### Technical Field

The present invention relates to a terminal device and an integrated circuit.

### Background Art

In a communication system, such as Wideband Code Division Multiple Access (WCDMA), Long Term Evolution (LTE), LTE-Advanced (LTE-A), or Worldwide Interoperability for Microwave Access (WiMAX), which is developed by Third Generation Partnership Project (3GPP), because efficient data transfer is realized, a Modulation and Coding Scheme (MCS) and the number of spatial multiplexes (the number of layers or a rank) are adaptively controlled according to a situation of a transfer path between a base station apparatus (a base station, a transmission station, a transmission point, a downlink transmission apparatus, an uplink reception apparatus, a transmit antenna group, a transmit antenna port group, a component carrier, or an eNodeB) and a terminal device (a mobile station apparatus, a reception station, a reception point, an uplink transmission apparatus, a downlink reception device, a mobile terminal, a receive antenna group, a receive antenna port group, or a User Equipment (UE)).

For example, in LTE, in a case where the number of spatial multiplexes, an MCS, and the like for a downlink transmission signal (for example, Physical Downlink Shared Channel (PDSCH)) that is transmitted in downlink are adaptively controlled, the terminal device calculates received quality information (which, alternatively, is also referred to as Channel State Information (CSI)), referring to a Downlink Reference Signal (DLRS) that is included in the downlink transmission signal which is transmitted from the base station apparatus, and reports the calculated received quality information to the base station apparatus through an uplink channel (for example, a PUCCH or a PUSCH). The base station apparatus transmits the downlink transmission on which the MCS or the number of spatial multiplexes, which is selected considering the received quality information and the like which are transmitted by the terminal device, is performed. A Rank Indicator (RI) indicating the suitable number of spatial multiplexes, a Precoding Matrix Indicator (PMI) indicating a suitable precoder, a Channel Quality Indicator (CQI) indicating a suitable transfer rate, and the like correspond to the received quality information. The reception quality information is disclosed in NPL 1.

### Citation List

### Non Patent Literature

NPL 1: 3GPP TS 36.213. V11.4.0 and 3rd Generation Partnership Project; Technical Specification Group Radio Access Network; Evolved Universal Terrestrial Radio Access (E-UTRA), Physical layer procedures (Release 11), September, 2013.

### Summary of Invention

### Technical Problem

In a wireless communication system, as one method for a further improvement in frequency efficiency, a heterogeneous network or a high density arrangement of small cells has been discussed. In a case of the heterogeneous network or the high density arrangement of small cells, interference from other cells increases. However, among these various interference situations, a case occurs where the MCS or the number of spatial multiplexes is not suitably applied if the CSI disclosed in NPL 1 is transmitted, as Channel State Information, to the base station apparatus, and a problem occurs in that throughput deteriorates.

An object of the present invention, which was made in view of this situation, is to provide a terminal device and an integrated circuit, in all of which it is possible that throughout is improved in a wireless environment in which various types of interference are caused.

### Solution to Problem

In order to deal with the problems described above, constitutions of a terminal device and an integrated circuit according to the present invention are as follows.

According to an aspect of the present invention, there is provided a terminal device that communicates with a base station apparatus, the terminal device including: a reception unit that assumes a first reference signal which corresponds to the base station apparatus and a second reference signal which is based on interference information that is configured by the base station apparatus; a channel state information generation unit that generates first channel state information which is based on at least the first reference signal and second channel state information which is based on at least the second reference signal; and a transmission unit that transmits the first channel state information and the second channel state information to the base station apparatus.

Furthermore, in the terminal device according to the aspect of the present invention, the transmission unit transmits the first channel state information and the second channel state information in the same subframe.

Furthermore, in the terminal device according to the aspect of the present invention, in a case of a configuration in which a rank indicator is reported, the channel state information generation unit generates a first rank indicator as the first channel state information and a second rank indicator as the second channel state information, and generates a channel state report signal from the first rank indicator and the second rank indicator, and the transmission unit transmits the channel state report signal to the base station apparatus.

Furthermore, in the terminal device according to the aspect of the present invention, in a case of a configuration in which a channel quality indicator is reported, the channel state information generation unit generates the channel quality indicator as the first channel state information, and generates a rank indicator as the second channel state information.

According to another aspect of the present invention, there is provided an integrated circuit that is built into a terminal device that communicates with a base station apparatus, the integrated circuit including: reception means that receives a first reference signal which corresponds to the base station apparatus and a second reference signal which is based on interference information that is configured by the base station apparatus; channel state information generation means that generates first channel state information which is based on at least the first reference signal and second channel state information which is based on at least the second reference signal; and transmission means that transmits the first channel state information and the second channel state information to the base station apparatus.

### Advantageous Effects of Invention

According to the present invention, throughput can be improved in a wireless environment in which various types of interference are caused.

### Brief Description of Drawings

[Fig. 1] Fig. 1 is a diagram illustrating an example of a communication system according to the present embodiment.
[Fig. 2] Fig. 2 is a block diagram illustrating an example of a constitution of a base station apparatus according to the present embodiment.
[Fig. 3] Fig. 3 is a block diagram illustrating an example of a constitution of a terminal device according to the present embodiment.
[Fig. 4] Fig. 4 is a diagram illustrating an example of a rank indicator according to the present embodiment.
[Fig. 5] Fig. 5 is a diagram illustrating an example of the rank indicator according to the present embodiment. Description of Embodiments

A communication system according to the present embodiment includes a base station apparatus (a transmission apparatus, a cell, a transmission point, a transmit antenna group, a transmit antenna port group, a component carrier, or an eNodeB) and a terminal device (a terminal, a mobile terminal, a reception point, a reception terminal, a reception device, a receive antenna group, a receive antenna port group or a UE).

According to the present embodiment, "X/Y" includes the meaning of "X or Y". According to the present embodiment, "X/Y" includes the meaning of "X and Y". According to the present embodiment, "X/Y" includes the meaning of "X and/or Y".

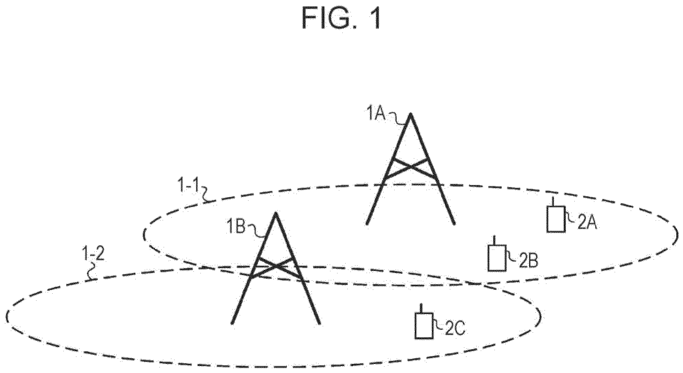

Fig. 1 is a diagram illustrating one example of the communication system according to the present embodiment. As illustrated in Fig. 1, the communication system according to the present embodiment includes base station apparatuses 1A and 1B and terminal devices 2A, 2B, and 2C. Furthermore, coverage 1-1 is a range (a communication area) in which it is possible that the base station apparatus 1A connects to the terminal device. Furthermore, coverage 1-2 is a range (a communication area) in which it is possible that the base station apparatus 1B to connect to the terminal device. The terminal devices 2A and 2B will also be described below as a terminal device 2.

In Fig. 1, in a case where the base station apparatus 1A spatially multiplexes the terminal device 2A and the terminal device 2B, or in a case where the terminal device 2 receives inter-cell interference from the base station apparatus 1B, reception signals in the terminal device 2 include a desired signal that is destined for the terminal device 2 itself (which is also referred to as a first terminal device) and a signal that is desired for a terminal device (which is referred to as a second terminal device) that causes interference. Specifically, the reception signals in the terminal device 2A include a desired signal that is destined for the terminal device 2A itself, and a signal that is destined for the terminal device 2B, which are transmitted from the base station apparatus 1A, and an interference signal that is a signal that is destined for the terminal device 2C, which is transmitted from the base station apparatus 1B. Furthermore, the reception signals in the terminal device 2B include a desired signal that is destined for the terminal device 2B itself and a signal that is destined for the terminal device 2A, which are transmitted from the base station apparatus 1A, and an interference signal that is a signal that is destined for the terminal device 2C, which is transmitted from the base station apparatus 1B.

In this manner, the present embodiment may apply to either a case where the base station apparatus spatially multiplexes multiple terminal devices and thus the terminal device receives the inter-user interference or a case where the base station apparatus spatially multiplexes multiple terminal devices and thus the terminal device receives inter-cell interference from a different base station apparatus, and is not limited to the communication system in Fig. 1. Furthermore, the inter-user interference and the inter-cell interference do not necessarily need to be received at the same time, and any of the case of receiving only the inter-user interference and the case of receiving only the inter-cell interference falls within the scope of the present invention as well.

In Fig. 1, in uplink wireless communication from the terminal device 2 to the base station apparatus 1A, the following uplink physical channels are used. The uplink physical channels are used for transmitting information that is output from a higher layer.
- Physical Uplink Control Channel (PUCCH)
- Physical Uplink Shared Channel (PUSCH)
- Physical Random Access Channel (PRACH)

The PUCCH is used for transmitting Uplink Control Information (UCI). At this point, the Uplink Control Information includes a positive acknowledgement (ACK) or a negative acknowledgement (NACK) (ACK/NACK) of downlink data (a downlink transport block or a Downlink-Shared Channel (DL-SCH)). The ACK/NACK of the downlink data is also referred to as an HARQ-ACK or HARQ feedback.

Furthermore, the Uplink Control Information includes a Channel State Information (CSI) for downlink. Furthermore, the Uplink Control Information includes a Scheduling Request (SR) that is used for making a request for a resource for an Uplink-Shared Channel (UL-SCH). A Rank Indicator (RI) indicating the suitable number of spatial multiplexes, a Precoding Matrix Indicator (PMI) indicating a suitable precoder, a Channel Quality Indicator (CQI) indicating a suitable transfer rate, and the like correspond to the Channel State Information.

The Channel Quality Indicator (which is hereinafter referred to as a CQI value) can be defined as a suitable modulation scheme (for example, QPSK, 16 QAM, 64 QAM, 256 QAM, or the like) in a prescribed band (which will be described in detail below) and a code rate. The CQI value can be defined as an index (CQI Index) that is fixed with the change scheme and the cord rate. The CQI value can be defined in advance in the system.

Moreover, the Rank Indicator and the Precoding Quality Indicator can be defined in advance in the system. The Rank Indicator and the Precoding Matrix Indicator can be defined as an index that is fixed in advance with the number of spatial multiplexes or the Precoding Matrix information. Moreover, values of the Rank Indicator, the Precoding Matrix Indicator, and the Channel Quality Indicator (CQI) are collectively referred to as the CSI value.

The PUSCH is used for transmitting uplink data (an uplink transport block or the UL-SCH). Furthermore, the PUSCH may be used for transmitting the ACK/NACK and/or the Channel State Information, along with the uplink data. Furthermore, the PUSCH may be used for transmitting only the Uplink Control Information.

Furthermore, the PUSCH is used for transmitting an RRC message. The RRC message is a piece of information/signal that is processed in a Radio Resource Control (RRC) layer. Furthermore, the PUSCH is used for transmitting a MAC Control Element (CE). At this point, the MAC CE is a piece of information/signal that is processed (transmitted) in a medium access control (MAC) layer.

For example, a power headroom may be included in the MAC CE and may be reported through the PUSCH. That is, a MAC CE field may be used for indicating a power headroom level.

The PRACH is used for transmitting a random access preamble.

Furthermore, in the uplink wireless communication, an Uplink Reference Signal (UL RS) is used as an uplink physical signal. The uplink physical signal is not used for transmitting the information that is output from the higher layer, but is used by a physical layer. At this point, a Demodulation Reference Signal (DMRS) and a Sounding Reference Signal (SRS) are included in the Uplink Reference Signal.

The DMRS is associated with transmission of the PUSCH or the PUCCH. For example, the base station apparatus 1A uses the DMRS to perform channel reconfiguration of the PUSCH or the PUCCH. The SRS is not associated with the transmission of the PUSCH or the PUCCH. For example, the base station apparatus 1A uses the SRS to measure an uplink channel state.

In Fig. 1, in downlink wireless communication from the base station apparatus 1A to the terminal device 2, the following downlink physical channels are used. The downlink physical channels are used for transmitting the information that is output from the higher layer.
- Physical Broadcast Channel (PBCH)
- Physical Control Format Indicator Channel (PCFICH)
- Physical Hybrid automatic repeat request Indicator Channel (PHICH)
- Physical Downlink Control Channel (PDCCH)
- Enhanced Physical Downlink Control Channel (EPDCCH)
- Physical Downlink Shared Channel (PDSCH)

The PBCH is used for broadcasting a Master Information Block (MIB) (Broadcast Channel (BCH)) that is used in a shared manner in the terminal device 2. The PCFICH is used for transmitting information indicating a region (for example, the number of OFDM symbols) that is used for transmission of the PDCCH.

The PHICH is used for transmitting the ACK/NACK of the uplink data (a transport block or a codeword) that is received by the base station apparatus 1A. That is, the PHICH is used for transmitting an HARQ indicator (HARQ feedback) indicating the ACK/NACK of the uplink data. Furthermore, the ACK/NACK is also referred to as a HARQ-ACK. The terminal device 2 notifies the higher layer of the received ACK/NACK. The ACK/NACK is an ACK indicating that reception is correctly performed, a NACK indicating that reception is not correctly performed, and DTX indicating that corresponding data is not present. Furthermore, in a case where the PHICH for the uplink data is not present, the terminal device 2 notifies the higher layer of the ACK.

The PDCCH and the EPDCCH are used for transmitting Downlink Control Information (DCI). At this point, multiple DCI formats are defined for transmission of the Downlink Control Information. That is, a field for the Downlink Control Information is defined in a DCI format and is mapped to an information bit.

For example, DCI format 1A that is used for scheduling of one PDSCH (transmission of one downlink transport block) in one cell is defined as a DCI format for the downlink.

For example, information relating to PDSCH resource allocation, information relating to a Modulation and Coding Scheme (MCS) for the PDSCH, and the Downlink Control Information such as a TPC command for the PUCCH are included in the DCI format for the downlink. At this point, the DCI format for the downlink is also referred to as a downlink grant (or a downlink assignment).

Furthermore, for example, DCI format 0 that is used for scheduling of one PUSCH (transmission of one uplink transport block) in one cell is defined as a DCI format for uplink.

For example, information relating to PUSCH resource allocation, information relating to an MCS for the PUSCH, and Uplink Control Information such as a TPC command for the PUSCH are included in the DCI format for the uplink. The DCI format for the uplink is also referred to as an uplink grant (or an uplink assignment).

Furthermore, a DCI format for the uplink can be used for making a request for the Channel State Information (CSI request) (which is also referred to as received quality information) for the downlink. The Rank Indicator (RI) indicating the suitable number of spatial multiplexes, the Precoding Matrix Indicator (PMI) indicating a suitable precoder, the Channel Quality Indicator (CQI) indicating a suitable transfer rate, and the like correspond to the Channel State Information.

Furthermore, the DCI format for the uplink can be used for a configuration indicating an uplink resource to which a channel state information report (CSI feedback report) that is fed back by the terminal device to the base station apparatus is mapped. For example, the channel state information report can be used for a configuration indicating an uplink resource in which the Channel State Information (Periodic CSI) is periodically reported. The channel state information report can be used for a mode configuration (CSI report mode) in which the Channel State Information is periodically reported.

For example, the channel state information report can be used for a configuration indicating an uplink resource in which the aperiodic Channel State Information (Aperiodic CSI) is reported. The channel state information report can be used for a mode configuration (CSI report mode) in which the Channel State Information is aperiodically reported. Base station apparatuses 100-1 and 100-2 can configure either the periodic channel state information report or the aperiodic channel state information report. Furthermore, the base station apparatuses 100-1 and 100-2 can configure both of the periodic channel state information report and the aperiodic channel state information report.

Furthermore, the DCI format for the uplink can be used for a configuration indicating a type of channel state information report that is fed back by the terminal device to the base station apparatus. As the type of the channel state information report, there are a broadband CSI (for example, a Wideband CQI), a narrowband CSI (for example, a subband CQI), and the like.

Furthermore, the DCI format for the uplink can be used for a mode configuration that includes the periodic channel state information report or the aperiodic channel state information report and the type of channel state information report. For example, there are a mode in which the aperiodic channel state information report and the broadband CSI are reported, a mode in which the aperiodic channel state information report and the narrowband CSI are reported, a mode in which the aperiodic channel state information report, the broadband CSI, and the narrowband CSI are reported, a mode in which the periodic channel state information report and the broadband CSI are reported, a mode in which the periodic channel state information report and the narrowband CSI are reported, and a mode in which the periodic channel state information report, the broadband CSI, and the narrowband CSI are reported.

In the case where a PDSCH resource is scheduled using the downlink assignment, the terminal device 2 receives the downlink data, on a scheduled PDSCH. Further, in a case where a PUSCH resource is scheduled using the uplink grant, the terminal device 2 transmits the uplink data and/or the Uplink Control Information, on the scheduled PUSCH.

The PDSCH is used for transmitting the downlink data (the downlink transport block or the DL-SCH). Furthermore, the PDSCH is used for transmitting a system information block type-1 message. The system information block type-1 message is cell-specific (cell-peculiar) information.

Furthermore, the PDSCH is used for transmitting a system information message. The system information message includes a system information block X other than a system information block type-1. The system information message is cell-specific (cell-peculiar) information.

Furthermore, the PDSCH is used for transmitting the RRC message. At this point, the RRC message that is transmitted from the base station apparatus 1A may be common to multiple terminal devices 2 within a cell. Furthermore, the RRC message that is transmitted from the base station apparatus 1A may be a message (which is also referred to as dedicated signaling) dedicated to a certain terminal device 2. That is, user equipment-specific (user equipment-peculiar) information is transmitted using a message dedicated to a certain terminal device 2. Furthermore, the PDSCH is used for transmitting the MAC CE.

At this point, the RRC message and/or the MAC CE are also referred to as higher layer signaling.

Furthermore, the PDSCH can be used for making a requesting the Channel State information for the downlink. Furthermore, the PDSCH can be used for transmitting the uplink resource to which the channel state information report (CSI feedback report) that is fed back by the terminal device to the base station apparatus is mapped. For example, the channel state information report can be used for the configuration indicating the uplink resource in which the Channel State Information (Periodic CSI) is periodically reported. The channel state information report can be used for the mode configuration (CSI report mode) in which the Channel State Information is periodically reported.

As the type of the channel state information report for the downlink, there are a broadband CSI (for example, a Wideband CSI), a narrowband CSI (for example, a subband CSI), and the like. The broadband CSI results from calculating one piece of Channel State Information for a cell system band. The narrowband CSI results from categorizing a system band into prescribed units and calculating one piece of Channel State Information for the categorization.

Furthermore, in the downlink wireless communication, a synchronization signal (SS) and a Downlink Reference Signal (DL RS) are used as downlink physical signals. The downlink physical signal is not used to transmit the information that is output from the higher layer, but is used by the physical layer.

The synchronization signal is used for the terminal device 2 to be synchronized to a frequency domain for and a time domain for the downlink. Furthermore, the Downlink Reference Signal is used for the terminal device 2 to perform the channel reconfiguration of the downlink physical channel. For example, the Downlink Reference Signal is used for the terminal device 2 to calculate the Channel State Information for the downlink.

At this point, a Cell-specific Reference Signal (CRS), a UE-specific Reference Signal (URS) associated with the PDSCH, a Demodulation Reference Signal (DMRS) associated with the EPDCCH, a Non-Zero Power Chanel State Information - Reference Signal (NZP CSI-RS), and a Zero Power Chanel State Information - Reference Signal (ZP CSI-RS) are included in the Downlink Reference Signal.

The CRS is transmitted in all bands for a subframe, and is used for performing demodulation of the PBCH/PDCCH/PHICH/PCFICH/PDSCH. The URS associated with the PDSCH is transmitted in a subframe and a band that are used for transmission of the PDSCH with which the URS is associated, and is used for performing the demodulation of the PDSCH with which the URS is associated.

The DMRS associated with the EPDCCH is transmitted in a subframe and a band that are used for transmission of the EPDCCH with which the DMRS is associated. The DMRS is used for performing demodulation of the EPDCCH with which the DMRS is associated.

A resource for the NZP CSI-RS is configured by the base station apparatus 1A. For example, the terminal device 2 performs signal measurement (channel measurement) using the NZP CSI-RS. A resource for the ZP CSI-RS is configured by the base station apparatus 1A. With a zero output, the base station apparatus 1A transmits the ZP CSI-RS. For example, the terminal device 2 performs interference measurement on a resource to which the NZP CSI-RS corresponds.

A resource for the ZP CSI-RS is configured by the base station apparatus 1A. With a zero output, the base station apparatus 1B transmits the ZP CSI-RS. More precisely, the base station apparatus 1A does not transmit the ZP CSI-RS. The base station apparatus 1B does not transmit the PDSCH and the EPDCCH on a resource on which the ZP CSI-RS is configured. For example, the terminal device 2C can measure interference in a resource to which the NZP CSI-RS corresponds in a certain cell.

The MBSFN RS is transmitted in an entire band for a subframe that is used for transmission of the PMCH. The MBSFN RS is used for performing demodulation of the PMCH. The PMCH is transmitted in an antenna port that is used for transmission of the MBSFN RS.

At this point, the downlink physical channel and the downlink physical signal are also collectively referred to as a downlink signal. Furthermore, the uplink physical channel and the uplink physical signal are also collectively referred to as an uplink signal. Furthermore, the downlink physical channel and the uplink physical channel are also collectively referred to as a physical channel. Furthermore, the downlink physical signal and the uplink physical signal are also collectively referred to as a physical signal.

Furthermore, a BCH, a UL-SCH and a DL-SCH are transport channels. A channel that is used in a MAC layer is referred to as a transport channel. Furthermore, a unit of the transport channel that is used in the MAC layer is also referred to as a Transport Block (TB) or a MAC Protocol Data Unit (PDU). The Transport Block is a unit in which the MAC layer delivers data to the physical layer. In the physical layer, the Transport Block is mapped to a codeword, and coding processing and the like are performed on every codeword.

In a case where the terminal device receives the inter-user interference or the inter-user interference, the terminal device can be equipped with a function of cancelling or suppressing the interference signal in the terminal device. This technology has been discussed as Network Assisted Interference Cancellation and Suppression (NAICS) in 3rd Generation Partner Ship (3GPP). With the NAICS, the terminal device receives or detects parameter relating to a different terminal device that causes interference, and cancels or suppresses the interference signal using the parameter. Accordingly, the terminal device can obtain a signal that is destined for the terminal device itself, with high precision. For the cancellation or suppression of the interference signal, linear detection and non-linear detection can be performed. With the linear detection, the interference signal can be detected considering a channel for a desired signal that is destined for the terminal device itself and a channel for the interference signal that is destined for a different terminal device. This linear detection is also referred to as Enhanced Linear Minimum Mean Square Error-Interference Rejection Combining (ELMMSE-IRC). Furthermore, as the non-linear detection, interference canceller or maximum likelihood detection can be performed.

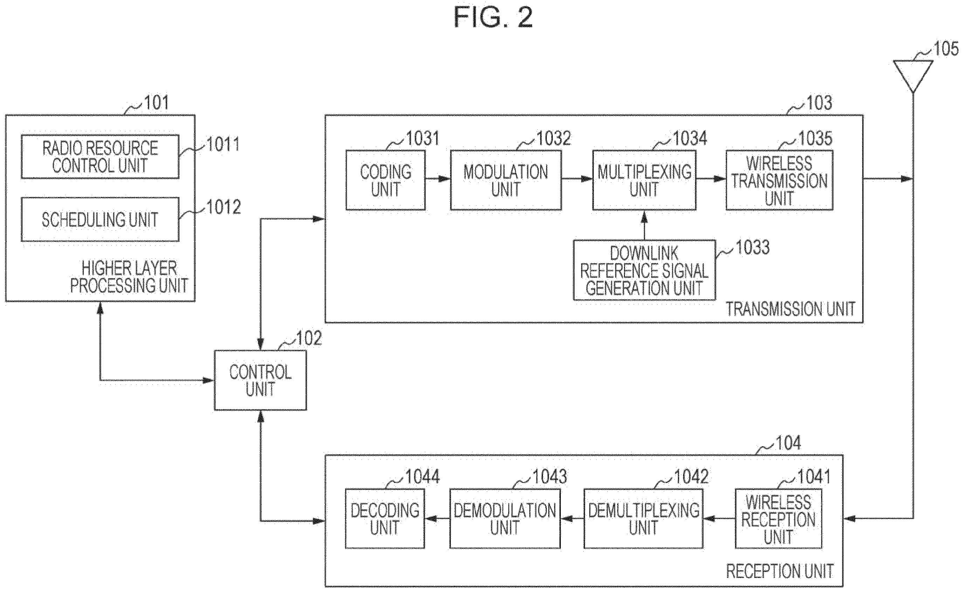

Fig. 2 is a schematic block diagram illustrating a constitution of the base station apparatus 1A according to the present embodiment. As illustrated in Fig. 2, the base station apparatus 1A is constituted to include a higher layer processing unit 101, a control unit 102, a transmission unit 103, a reception unit 104, and a transmit and receive antenna 105. Furthermore, the higher layer processing unit 101 is constituted to include a radio resource control unit 1011 and a scheduling unit 1012. Furthermore, the transmission unit 103 is constituted to include a coding unit 1031, a modulation unit 1032, a downlink reference signal generation unit 1033, a multiplexing unit 1034, and a wireless transmission unit 1035. Furthermore, the reception unit 104 is constituted to include a wireless reception unit 1041, a demultiplexing unit 1042, a demodulation unit 1043, and a decoding unit 1044.

The higher layer processing unit 101 performs processing of the medium access control (MAC) layer, a packet data convergence protocol (PDCP) layer, a radio link control (RLC) layer, and the radio resource control (RRC) layer. Furthermore, the higher layer processing unit 101 generates information indispensable to perform control of the transmission unit 103 and the reception unit 104, and outputs the generated information to the control unit 102.

The radio resource control unit 1011 generates or acquires from a higher node the downlink data (the Transport Block) that is mapped to the PDSCH for the downlink, the system information, the RRC message, the MAC CE, and the like. The radio resource control unit 1011 outputs the downlink data to the transmission unit 103, and outputs other pieces of information to the control unit 102. Furthermore, the radio resource control unit 1011 manages various pieces of configuration information of the terminal device 2. This configuration information can include configuration information of the terminal device that causes the interference. Alternatively, the configuration information of the terminal device that causes the interference can be made to be acquired from the configuration information of the terminal device 2 itself.

The radio resource control unit 1011 can generate a channel state information report configuration and output the generated the channel state information report configuration to the control unit 102. The radio resource control unit 1011 can generate a channel state information request and output the generated the channel state information request to the control unit 102.

The radio resource control unit 1011 can include interference information in configuration information relating to CSI feedback. The terminal device obtains CSI using the interference information. The interference information, for example, is information that is useful for the terminal device to obtain the CSI, such as a cell ID in the interference signal, the number of antenna ports, an antenna port number, a modulation scheme, a code rate, a virtual cell ID, and a scrambling identity (nSCID). Furthermore, the terminal device can specify a reference signal associated with the interference signal based on the interference information, and can measure a channel state based on the reference signal. For example, the reference signal is a CRS, or a CSI-RS and/or a DMRS. Moreover, in case where the terminal device performs the cancellation or suppression of the interference signal, if information for demodulating the interference signal is transmitted from the base station apparatus, interference information relating to the CSI and interference information relating to the modulation may be different from each other. The interference information hereinafter indicates the interference information relating to the CSI unless specified otherwise.

When it comes to interference information that is described according to the present embodiment, the terminal device does not need to recognize that such interference information is information for the interference signal. That is, such interference information is information for the terminal device to measure, generate, and report the CSI, and may be simply information or information for the CSI.

The base station apparatus can configure the interference information using all transmission modes, and can determines whether or not to perform configuration according to the transmission mode. For example, the base station apparatus can include the interference information in the configuration information relating to the CSI feedback at the time of using the transmission mode in which the demodulation is performed using the DMRS. The transmission mode in which the demodulation is performed using the DMRS is transmission mode 8/9/10. For example, the base station apparatus can include the interference information in the configuration information relating to the CSI feedback at the time of using the transmission mode in which the demodulation is performed using the CRS. In other words, the terminal device configures the interference information for a prescribed transmission mode. That is, in a transmission mode other than the prescribed transmission mode, the terminal device does not expect that the interference information is configured. Furthermore, the transmission mode in which the interference information can be configured can be set to be a transmission mode in which a CSI process can be configured and/or a transmission mode in which a CSI subframe set can be configured.

The base station apparatus can configure the interference information with a CSI report mode. For example, in a case where PMI/RI reporting is configured, the base station apparatus can include the interference information in the configuration information relating to the CSI feedback. For example, in a case where the PMI/RI reporting is not configured, the base station apparatus can include the interference information in the configuration information relating to the CSI feedback. For example, in a case of a configuration in which the CSI is periodically reported, the base station apparatus can include the interference information in the configuration information relating to the CSI feedback. For example, in a case of a configuration in which the CSI is aperiodically reported, the base station apparatus can include the interference information in the configuration information relating to the CSI feedback. For example, in a case of a configuration in which a PMI/CQI is periodically reported, the base station apparatus can include the interference information in the configuration information relating to the CSI feedback. For example, in a case of a configuration in which a narrowband PMI/CQI is periodically reported, the base station apparatus can include the interference information in the configuration information relating to the CSI feedback. In other words, the terminal device configures the interference information for a prescribed CSI report mode. That is, in a CSI report mode other than the prescribed CSI report mode, the terminal device does not expect that the interference information is configured.

The base station apparatus can include a configuration (a CSI process) relating to a procedure for calculating the Channel State Information in higher layer signaling, in a state of being associated with at least CSI-Reference Signal (CSI-RS) for channel measurement and CSI-Interference Measurement (CSI-IM) for interference measurement. An CSI process ID thereof can be included in the CSI process. The base station apparatus can configure one or more CSI processes. The base station apparatus can generate CSI feedback independently of every CSI process described above. The base station apparatus can provide a configuration in which a CSI-RS resource and CSI-IM differ from one CSI process to another. The terminal device configures one or more CSI processes, and performs CSI reporting independently for every configured CSI process. Furthermore, the CSI process is configured in a prescribed transmission mode.

The base station apparatus can transmit the interference information, in a state of being associated with the configuration information relating to the CSI feedback. The base station apparatus can configure the interference information individually for every CSI process. The base station apparatus can configure the interference information individually for every CSI subframe set. The CSI subframe set is bitmap information indicating which subframe the CSI is generated based on. For example, the base station apparatus can configure the interference information in a shared manner that is common to all CSI processes and/or all CSI subframe sets.

In a case where the terminal device is instructed to perform the cancellation or suppression of the interference signal, the base station apparatus can include the interference information in the configuration information relating to the CSI feedback. For example, in a case where the NAICS is configured in the higher layer, the base station apparatus can include the interference information in the configuration information relating to the CSI feedback.

The base station apparatus can configure one piece of interference information, or can configure multiple pieces of interference information. The base station apparatus can indicate whether or not to instruct the terminal device about generating the CSI considering the configured interference information. For example, the base station apparatus can transmit information indicating whether or not to generate the CSI considering the configured interference information, to the terminal device, using the Donwlink Control information or the like. Furthermore, in a case where multiple pieces of interference information are configured, information indicating one or several pieces of interference information among such multiple pieces of interference information, to the terminal device with the Downlink Control Information. For example, in a case where multiple pieces of interference information are configured for the CSI process and where the CSI reporting is requested, information indicating one piece of interference information among the multiple pieces of interference information can be transmitted to the terminal device.

The scheduling unit 1012 determines a frequency and a subframe to which the physical channels (the PDSCH and PUSCH) are allocated, a code rate and a modulation scheme (or the MCS) of and for the physical channels (the PDSCH and the PUSCH), transmit power, and the like. The scheduling unit 1012 outputs pieces of information that are determined, to the control unit 102.

The scheduling unit 1012 generates information that is used for scheduling of the physical channels (the PDSCH and the PUSCH), based on a result of the scheduling. The scheduling unit 1012 outputs the generated information to the control unit 102. According to the present embodiment, as one example, the scheduling unit 1012 schedules the terminal device 2A and the terminal device 2B to use the same resource. Moreover, according to the present embodiment, for simplicity, the scheduling is performed for the use of the same resource, but may be performed for the use of different resources. Moreover, the scheduling can be performed in cooperation with the base station apparatus 1B.

Based on information that is input from the higher layer processing unit 101, the control unit 102 generates a control signal for performing control of the transmission unit 103 and the reception unit 104. The control unit 102 generates the Downlink Control Information, based on the information that is input from the higher layer processing unit 101, and outputs the generated Downlink Control Information to the transmission unit 103.

The transmission unit 103 generates the Downlink Reference Signal in accordance with the control signal that is input from the control unit 102, codes and modulates the HARQ indicator, the Downlink Control Information, and the downlink data, which are input from the higher layer processing unit 101, multiplexes the PHICH, the PDCCH, the EPDCCH, the PDSCH, and the Downlink Reference Signal, and transmits the resulting signal to the terminal device 2 through the transmit and receive antenna unit 105.

The coding unit 1031 performs coding on the HARQ indicator, the Downlink Control Information, and the downlink data, which are input from the higher layer processing unit 101. When performing the coding, the coding unit 1031 uses a coding scheme that is prescribed in advance, such as block coding, convolutional coding, or turbo coding, or uses a coding scheme that is determined by the radio resource control unit 1011. The modulation unit 1032 performs modulation on coded bits that are input from the coding unit 1031, using a modulation scheme that is prescribed in advance, such as Binary Phase Shift Keying (BPSK), quadrature Phase Shift Keying (QPSK), 16 quadrature amplitude modulation (QAM), 64 QAM, or 256 QAM, or using a modulation scheme that is determined by the radio resource control unit 1011.

The downlink reference signal generation unit 1033 generates as the Downlink Reference Signal a sequence that is already known to the terminal device 2, which is obtained according to a rule that is prescribed in advance based on a physical cell identity (PCI) for identifying the base station apparatus 1A, and the like.

The multiplexing unit 1034 multiplexes a modulation symbol of each channel, which results from the modulation, and the Downlink Reference Signal and the Downlink Control Information, which are generated. More precisely, the multiplexing unit 1034 maps the modulation symbol of each channel, which results from the modulation, and the Downlink Reference Signal and the Downlink Control Information, which are generated, to resource elements.

The wireless transmission unit 1035 performs Inverse Fast Fourier Transform (IFFT) on a modulation symbol and the like that result from the multiplexing, generates an OFDM symbol, attaches a cyclic prefix (CP) to the OFDM symbol, generates a digital signal in a baseband, converts the digital signal in the baseband into an analog signal, removes a superfluous frequency component by perform filtering, performs up-converting into a carrier frequency, performs power amplification, and outputs a final result to the transmit and receive antenna unit 105 for transmission.

In accordance with the control signal that is input from the control unit 102, the reception unit 104 outputs information, which results from demultiplexing, demodulating, and decoding a reception signal that is received from the terminal device 2 through the transmit and receive antenna 105, to the higher layer processing unit 101.

The wireless reception unit 1041 converts an uplink signal that is received through the transmit and receive antenna 105, into a signal in a base band by performing down-convert, removes a unnecessary frequency component, controls an amplification level in such a manner that a signal level is suitably maintained, performs orthogonal demodulation based on an in-phase component and an orthogonal component of the received signal, and converts an analog signal that results from the orthogonal demodulation, into a digital signal.

The wireless reception unit 1041 removes a portion that is equivalent to the CP from the digital signal that results from the conversion. The wireless reception unit 1041 performs Fast Fourier Transform (FFT) on the signal from which the CP is removed, extracts a signal in the frequency domain, and outputs the extracted signal to the demultiplexing unit 1042.

The demultiplexing unit 1042 demultiplexes the signal that is input from the wireless reception unit 1041 into the PUCCH, the PUSCH, and the signal such as the Uplink Reference Signal. Moreover, the demultiplexing is performed based on radio resource allocation information that is determined in advance by the base station apparatus 1A, using the radio resource control unit 1011, and that is included in the uplink grant that is notified to each terminal device 2.

Furthermore, the demultiplexing unit 1042 performs channel compensation on the PUCCH and the PUSCH. Furthermore, the demultiplexing unit 1042 demultiplexes the Uplink Reference Signal.

The demodulation unit 1043 performs Inverse Discrete Fourier Transform (IDFT) on the PUSCH, acquires the modulation symbol, and performs reception signal demodulation on each of the modulation symbols on the PUCCH and the PUSCH, using the modulation scheme that is prescribed in advance, such as BPSK, QPSK, 16 QAM, 64 QAM, or 256 QAM, or using the modulation scheme that is notified, in advance, with the uplink grant, to each terminal device 2 by the base station apparatus 1A itself.

The decoding unit 1044 performs the decoding on coded bits of the PUCCH and the PUSCH that result from the demodulation, at a coding rate in compliance with the coding scheme that is prescribed in advance, which is prescribed in advance, or at a coding rate which is notified in advance with the uplink grant to the terminal device 2 by the base station apparatus 1A itself, and outputs the uplink data and the Uplink Control Information that result from the decoding, to the higher layer processing unit 101. In the case of re-transmission of the PUSCH, the decoding unit 1044 performs the decoding using the coded bits that are input from the higher layer processing unit 101 and that are retained in an HARQ buffer, and the coded bits that result from the demodulation.

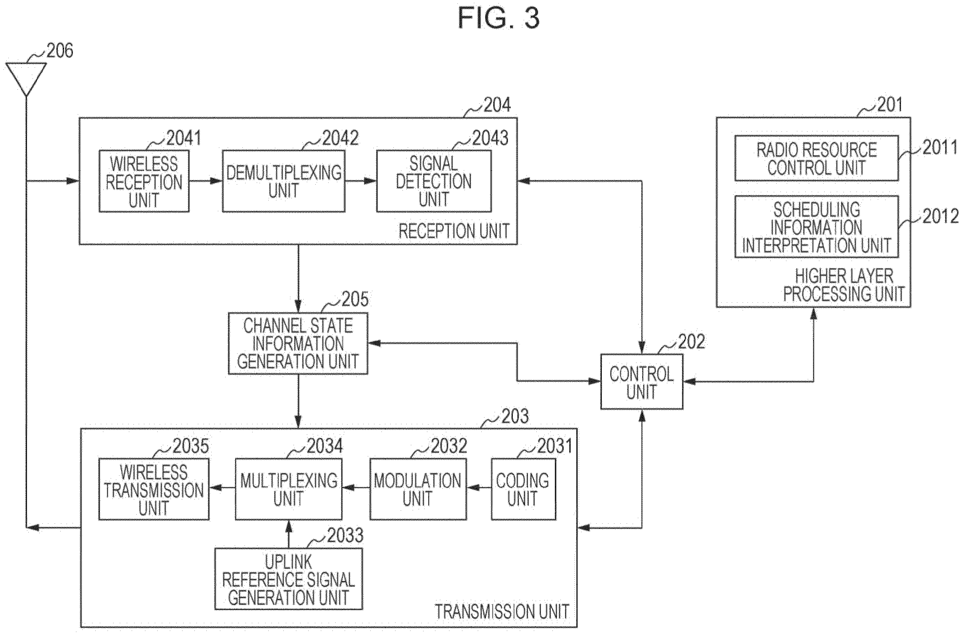

Fig. 3 is a schematic block diagram illustrating a constitution of the terminal device 2 according to the present embodiment. As illustrated in Fig. 3, the terminal device 2 is constituted to include a higher layer processing unit 201, a control unit 202, a transmission unit 203, a reception unit 204, a channel state information generation unit 205, and a transmit and receive antenna 206. Furthermore, the higher layer processing unit 201 is constituted to include a radio resource control unit 2011 and a scheduling information interpretation unit 2012. Furthermore, the transmission unit 203 is constituted to include a coding unit 2031, a modulation unit 2032, an uplink reference signal generation unit 2033, a multiplexing unit 2034, and a wireless transmission unit 2035. Furthermore, the reception unit 204 is constituted to include a wireless reception unit 2041, a demultiplexing unit 2042, and a signal detection unit 2043.

The higher layer processing unit 201 outputs the uplink data (the Transport Block) that is generated by a user operation and the like, to the transmission unit 203. Furthermore, the higher layer processing unit 201 performs the processing of the medium access control (MAC) layer, the packet data convergence protocol (PDCP) layer, the radio link control (RLC) layer, and the radio resource control (RRC) layer.

The radio resource control unit 2011 manages various pieces of configuration information of the terminal device 2 itself. Furthermore, the radio resource control unit 2011 generates information that is mapped to each uplink channel in the uplink and outputs the generated information to the transmission unit 203.

The radio resource control unit 2011 acquires configuration information relating to the CSI feedback, which is transmitted from the base station apparatus, and outputs the acquired configuration information to the control unit 202.

The scheduling information interpretation unit 2012 interprets the Downlink Control Information that is received through the reception unit 204 and determines scheduling information. Furthermore, the scheduling information interpretation unit 2012 generates control information in order to perform control of the reception unit 204 and the transmission unit 203 based on the scheduling information, and outputs the generated control information to the control unit 202.

Based on the information that is input from the higher layer processing unit 201, the control unit 202 generates a control signal for performing the control of the reception unit 204, the channel state information generation unit 205, and the transmission unit 203. The control unit 202 outputs the generated control signal to the reception unit 204, the channel state information generation unit 205, and the transmission unit 203 and performs the control of the reception unit 204 and the transmission unit 203.

Based on the configuration information relating to the CSI feedback, which is input from the higher layer processing unit 201, the control unit 202 can determine whether or not to generate the CSI considering the interference information. For example, in a case where the interference information is configured, the control unit 202 can determine that the CSI is generated considering the interference information. Furthermore, in the case where the interference information is configured, if information indicating the CSI is generated considering the interference information is present in the Downlink Control Information, the control unit 202 can determine that the CSI is generated considering the interference information. Furthermore, in the case where the interference information is configured, the control unit 202 can determine whether or not to generate the CSI considering the interference information.

In the case where the multiple pieces of interference information are configured, the control unit 202 can control the channel state information generation unit 205 in such a manner that the CSI is generated considering all pieces of interference information. Furthermore, in the case where the multiple pieces of interference information are configured, the channel state information generation unit 205 can be controlled in such a manner that the CSI is generated considering one piece of interference information, among all the pieces of interference information. For example, in the case of the configuration in which the CSI is aperiodically reported, if an instruction to consider which interference is provided with a CSI request, the control unit 202 controls the channel state information generation unit 205 in such a manner that the CSI is generated considering the interference information that has to be considered according to the instruction from the base station apparatus. Furthermore, in the case of the configuration in which the CSI is periodically reported, the channel state information generation unit 205 can be controlled in such a manner that the CSI is generated considering one piece of interference information, among multiple pieces of interference information. Furthermore, in the case of the configuration in which the CSI is periodically reported, the channel state information generation unit 205 can be controlled in such a manner that the CSI is generated considering multiple pieces of interference information sequentially one by one. Furthermore, in a case of a configuration in which the CSI is reported periodically and/or aperiodically, the control unit 202, for example, can control the channel state information generation unit 205 in such a manner that one interference signal with high received power is determined and the CSI is generated considering such one interference signal.

In a case where the interference information is configured for every CSI process, the control unit 202 can determine whether or not the CSI is generated considering the interference information for every CSI process. In a case where the interference information is configured for every CSI subframe, the control unit 202 can determine whether or not the CSI is generated considering the interference information for every CSI process.

In a case where it is determined that the CSI is generated considering the interference information, the control unit 202 controls the channel state information generation unit 205 in such a manner that the CSI is generated considering the interference information. In a case where it is determined that the CSI is generated without considering the interference information, the channel state information generation unit 205 can be controlled in such a manner that the CSI is generated without considering the interference information. In a case where the CSI is generated considering the interference information, the control unit 202 can control the channel state information generation unit 205 in such a manner that the CSI suitable for a case where the interference signal is cancelled or suppressed is generated. In the case where the CSI is generated considering the interference information, the control unit 202 can control the channel state information generation unit 205 in such a manner that report information relating to the interference signal is generated.

CSI in the related art is CQI/PMI/RI relating to a desired signal that is destined for the terminal device 2 itself, or the like, but in the case where the interference information is configured, the control unit 202 can control the channel state information generation unit 205 in such a manner that the report information relating to the interference signal is generated. The report information relating to the interference signal, for example, is a CQI/PMI/RI of the interference signal, the maximum number of interference layers from which it is possible for the terminal device to cancel the interference, the possibility or impossibility of the cancellation of the interference, a channel matrix of an interference channel, or the like. Moreover, unless specified otherwise, according to the present embodiment, the report information relating to the interference signal is also described as the CSI. Furthermore, CSI relating to a desired signal that is destined for the terminal device 2 itself is also referred to as first Channel State Information. Furthermore, the report information relating the interference signal is also referred to as a second Channel State Information.

Moreover, the first Channel State Information may be CSI suitable for the case where the interference signal is cancelled or suppressed, and may be CSI suitable for a case where the interference signal is neither cancelled nor suppressed. The base station apparatus can provide an instruction about whether or not the terminal device generates the CSI considering the cancellation or suppression of the interference signal.

When it comes to the channel state information in which the cancellation or suppression of the interference signal is considered, the channel state information generation unit 205 can generate the channel state information suitable for a case where the linear detection is performed, based on a channel estimate of the desired signal that is destined for the terminal device 2 itself and a channel estimate of the interference signal that is destined for a different terminal device. Furthermore, the channel state information generation unit 205 can signal-detect the interference signal based on the channel estimate of the interference signal, and can generate the Channel State Information suitable for a case where interference cancellation is performed. Furthermore, the channel state information generation unit 205 generate the Channel State Information suitable for a case where the maximum likelihood detection is performed, based on the channel estimate of the desired signal and the channel estimate of the interference signal. Furthermore, the Channel State Information suitable for a case where it is assumed that the interference signal is completely cancelled can be generated.

The channel state information generation unit 205 can generate a channel state report signal from the first Channel State Information and the second Channel State Information, and the transmission unit 203 can transmit the channel state report signal to the base station apparatus. In order to suppress an increase in an amount of feedback information, the channel state information generation unit 205 can generate the channel state report signal in such a manner that the same amount of information as an amount of CSI feedback information (the number of bits) of a desired signal in the related art is obtained. In this case, the terminal device can transmit a larger amount of report information to the base station apparatus while suppressing the increase in the amount of feedback information.

The control unit 202 controls the transmission unit 203 in such a manner that the channel state information generation unit 205 transmits the generated CSI to the base station apparatus.

In accordance with a control signal that is input from the control unit 202, the reception unit 204 outputs information, which results from demultiplexing, demodulating, and decoding a reception signal that is received from the base station apparatus 1A through the transmit and receive antenna 206, and outputs the resulting information to the higher layer processing unit 201. The reception unit 204 receives a reference signal (which is also referred to as a first reference signal) that corresponds to the base station apparatus 1A, and a reference signal (which is also referred to as a second reference signal) that is based on the interference information that is configured by the base station apparatus 1A, which are included in the reception signal, and outputs the received reference signals to the channel state information generation unit 205.

The wireless reception unit 2041 converts a downlink signal that is received through the transmit and receive antenna 206, into a signal in a base band by performing down-convert, removes a unnecessary frequency component, controls an amplification level in such a manner that a signal level is suitably maintained, performs orthogonal demodulation based on an in-phase component and an orthogonal component of the received signal, and converts an analog signal that results from the orthogonal demodulation, into a digital signal.

Furthermore, the wireless reception unit 2041 removes a portion that is equivalent to the CP from the digital signal that results from the conversion, performs Fast Fourier Transform on the signal from which the CP is removed, and extracts a signal in the frequency domain.

The demultiplexing unit 2042 demultiplexes a signal that results from the extraction, into the PHICH, the PDCCH, the EPDCCH, the PDSCH, and the Downlink Reference Signal. Furthermore, the demultiplexing unit 2042 performs channel compensation on the PHICH, the PDCCH, and the EPDCCH based on a channel estimate of a desired signal that is acquired from channel measurement, detects the Downlink Control Information, and outputs the detected Downlink Control Information to the control unit 202. Furthermore, the control unit 202 outputs the PDSCH and the channel estimate of the desired signal to the signal detection unit 2043.

The signal detection unit 2043 performs the signal detection using the PDSCH and the channel estimate, and outputs a result of the signal detection to the higher layer processing unit 201. In the higher layer, in a case where the NAICS is configured, the cancellation or suppression of the interference signal is performed and the signal detection is performed. As the cancellation or suppression of the interference signal, for example, the linear detection in which the channel estimate of the interference signal is considered, or the cancellation or the maximum likelihood detection in which the channel estimate of the interference signal or the modulation scheme is considered is performed.

The channel state information generation unit 205 obtains the CSI in accordance with the first and second reference signals that are input from the reception unit 204, and the control signal that is input from the control unit 202. In the case where the interference information is configured, the first Channel State Information and/or the second Channel State Information is generated. The first Channel State Information is generated at least from the first reference signal. In a case where the first Channel State Information suitable for the cancellation or suppression of the interference signal is generated, the first Channel State Information can be generated based on the first reference signal, and the second reference signal and/or the interference information. The second Channel State Information can be generated at least from the second reference signal.

The channel state information generation unit 205 can generate the CSI in which the interference information is considered. Therefore, in a case where the first Channel State Information is generated based on only the first reference signal, more precisely, in a case where the first Channel State Information is generated without considering the interference information, the second Channel State Information is generated. In the case where the first Channel State Information suitable for the cancellation or suppression of the interference signal is generated, more precisely, in a case where the first Channel State Information is generated based on the interference information, if a case where the second Channel State Information is generated is possible, a case where the second Channel State Information is not generated is possible as well. Whether or not the second Channel State Information is generated can be configured by the base station apparatus.

In the case where multiple pieces of interference information are configured, the channel state information generation unit 205 can generate the CSI considering all pieces of interference information. Furthermore, in the case where multiple pieces of interference information are configured, the channel state information generation unit 205 can generate the CSI considering one piece of interference information, among all the pieces of interference information. For example, in the case of the configuration in which the CSI is aperiodically reported, if an instruction to consider which interference is provided with the CSI request, the channel state information generation unit 205 generates the CSI considering the interference information that has to be considered according to the instruction from the base station apparatus. Furthermore, in the case of the configuration in which the CSI is periodically reported, the channel state information generation unit 205 can generate the CSI considering one piece of interference information that is determined, among multiple pieces of interference information. Furthermore, in the case of the configuration in which the CSI is periodically reported, the channel state information generation unit 205 can generate the CSI considering multiple pieces of interference information sequentially one by one. Furthermore, in the case of a configuration in which the CSI is reported periodically and/or aperiodically, the channel state information generation unit 205, for example, can determine one interference signal with high received power and can generate the CSI considering such one interference signal. In a case where multiple interference signals are configured, if the CSI is generated for one interference signal, among the multiple interference signals, the terminal device can information indicating the one interference signal, as the CSI, to the base station apparatus.

In the case where the interference information is configured, if a configuration in which the RI is reported is available, the channel state information generation unit 205 can obtain the RI of the desired signal that is destined for the terminal device 2 itself, as the first Channel State Information, and the RI of the interference signal that is destined for a different terminal device, as the second Channel State Information. The RI of the interference signal indicates the number of layers, from which it is possible to cancel the interference, the number of layers suitable for the interference cancellation, the possibility or impossibility of the interference, and the like. Moreover, the RI of the desired signal that is destined for the terminal device 2 itself is also referred to as a first rank indicator, and the RI of the interference signal that is destined for a different terminal device is also referred to as a second rank indicator.

The RI of the interference signal can be reported to the base station apparatus with different signaling than the RI of the interference signal. Furthermore, the RI of the interference signal serves for generation as the channel state report signal in the rank indicator, in conjunction with the RI of the desired signal, and this channel state report information can be reported to the base station apparatus.

For example, in a case where the number of interference layers is fixed to 1, if the terminal device reports 2, as the channel state report signal in the rank indicator, to the base station apparatus, the base station apparatus can determine that the RI of the desired signal is 1 and the RI of the interference signal is 1.

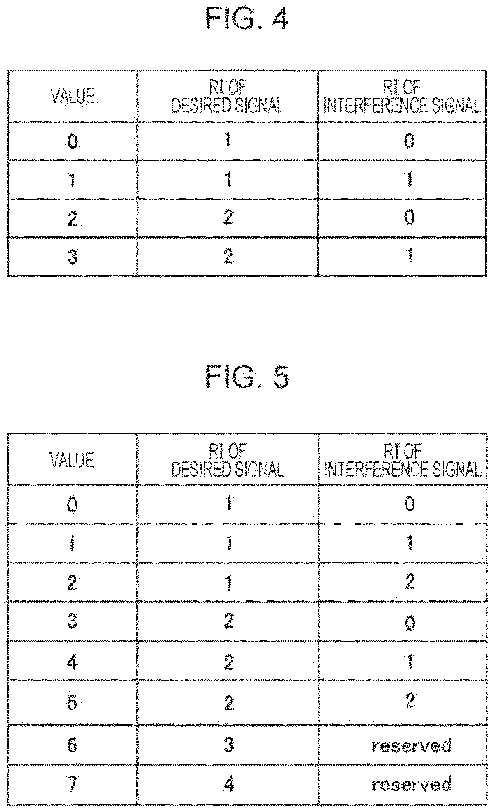

Furthermore, in a case where configuration is performed in such a manner that the RI of the interference signal is reported, the terminal device can report a value as illustrated in an example in Fig. 4, as the channel state report signal, to the base station apparatus. For example, in a case where the terminal device reports a value 0 to the base station apparatus, it can be determined that the RI of the desired signal is 1 and the RI of the interference signal is 0. Moreover, the RI of the desired signal has the same meaning as a RI in the related art. The RI of the interference signal can indicate the number of layers from which it is possible to cancel the interference, the possibility or impossibility of the interference cancellation, and the like. For example, in a case where the RI of the interference signal is 0, this indicates the impossibility of the interference cancellation, and in a case where the RI is 1, this indicates the possibility of the interference cancellation. In a case where the interference cancellation is not possible, the base station apparatus can perform interference coordination. Furthermore, the RI of the interference signal can be set to be an index of the interference information, from which it is desirable to cancel the interference. For example, in a case where multiple pieces of interference information are configured in the higher layer, the terminal device can determine which interference signal is suitable for its cancellation, and can report information indicating the interference information that is determined, as the RI of the interference signal, to the base station apparatus.

Furthermore, as illustrated in Fig. 5, the RI of the interference signal can be set to be 2 or greater. Furthermore, when a value is 6 or 7, the terminal device can report only the RI of the desired signal to the base station apparatus.

As illustrated in Fig. 4 and 5, the terminal device can report the CSIs of the desired signal and the interference signal to the base station apparatus while reducing the amount of feedback information.

In the case where the interference information is configured, if configuration is performed in such a manner that the PMI is reported, the channel state information generation unit 205 can generate the PMI of the desired signal that is destined for the terminal device 2 itself and the PMI of the interference signal that is destined for a different terminal device. In a case where the interference signal is cancelled, as the PMI of the interference signal, a PMI indicating that the interference signal has high signal power is selected. Because the interference signal that has high power is an interference signal that has satisfactory received quality, interference cancellation performance is improved.

In the case where the interference information is configured, if configuration is performed in such a manner that the CQI is reported, the channel state information generation unit 205 can generate the CQI of the desired signal that is destined for the terminal device 2 itself and the CSI of the interference signal that is destined for a different terminal device. In a case where the CQI of the desired signal is transmitted to the base station apparatus, the CQI/PMI/RI can be transmitted as the CSI relating to the interference signal. For example, the RI of the interference signal can be transmitted in the same subframe as the CQI of the desired signal. According to the present embodiment, because the RI of the interference signal can indicate a rank of the interference signal, the number of layers from which it is possible to cancel the interference, the possibility or impossibility of the interference cancellation, and the like, the terminal device reports the RI of the interference signal along with the CQI of the desired signal, and thus the base station apparatus can know an interference situation in addition to the CQI of the desired signal. As a result, efficient communication can be performed.

The transmission unit 203 generates the Uplink Reference Signal in accordance with the control signal, which is input from the control unit 202, performs the coding and the modulation on the uplink data (the Transport Block), which is input from the higher layer processing unit 201, multiplexes the PUCCH, the PUSCH, and the generated Uplink Reference Signal, and transmits a result of the multiplexing to the base station apparatus 1A through the transmit and receive antenna 206.

The coding unit 2031 performs the coding, such as the convolutional coding or the block coding, on the Uplink Control Information that is input from the higher layer processing unit 201. Furthermore, the coding unit 2031 performs the turbo coding, based on information that is used for scheduling of the PUSCH.

The modulation unit 2032 performs the modulation on coded bits, which are input from the coding unit 2031, in compliance with a modulation scheme that is notified with the Downlink Control Information, such as BPSK, QPSK, 16 QAM, or 64 QAM, or in compliance with a modulation scheme that is prescribed in advance for every channel.

The uplink reference signal generation unit 2033 generates a sequence that is obtained according to a rule (formula) which is prescribed in advance, based on a physical cell identity (which is also referred to as a PCI or a Cell ID) for identifying the base station apparatus 1A, a bandwidth to which the Uplink Reference Signal is mapped, a cyclic shift that is notified with the uplink grant, a parameter value for generation of a DMRS sequence, and the like.

In accordance with the control signal that is input from the control unit 202, the multiplexing unit 2034 re-maps the modulation symbols on the PUSCH in parallel and then performs Discrete Fourier Transform (DFT) on the resulting modulation symbols. Furthermore, the multiplexing unit 2034 multiplexes PUCCH and PUSCH signals and the generated Uplink Reference Signal for every transmit antenna port. More precisely, the multiplexing unit 2034 maps the PUCCH and PUSCH signals and the generated Uplink Reference Signal to resource elements for every transmit antenna port.

The wireless transmission unit 2035 performs Inverse Fast Fourier Transform (IFFT) on a signal that results from the multiplexing, performs modulation in compliance with an SC-FDMA scheme on the resulting signal, generates an SC-FDMA symbol, attaches a CP to the generated SC-FDMA symbol, generates a digital signal in a base band, converts the digital signal in the base band into an analog signal, removes superfluous frequency components, performs up-convert into a carrier frequency, performs power amplification, and transmits a final result to the transmit and receive antenna 206 for transmission.

In this manner, according to the present embodiment, the terminal device generates the CSI that is based on the interference information that is configured by the base station apparatus, and transmits the generated CSI to the base station apparatus. Therefore, even in a case where the possibility or impossibility of the cancellation or suppression of the interference signal, or the performance of or a scheme for the cancellation or suppression of the interference signal changes from one terminal device to another, the base station apparatus can know the interference information of each terminal device. As a result, the efficient communication is possible.

A program running on the base station apparatus and the terminal device according to the present invention is a program (a program for causing a computer to perform functions) that controls a CPU and the like in such a manner as to realize the functions according to the embodiments of the present invention, which are described above. Then, pieces of information that are handled in the apparatus and the device are temporarily stored in a RAM while being processed. Thereafter, the pieces of information are stored in various ROMs or HDDs, and if need arises, is read by the CPU to be modified or written. Of a semiconductor medium (for example, a ROM, a nonvolatile memory card, and the like), an optical storage medium (for example, a DVD, a MO, a MD, a CD, a BD, and the like), a magnetic storage medium (for example, a magnetic tape, a flexible disk, and the like), and the like, any one may be possible as a recording medium on which to store the program. Furthermore, in some cases, the functions according to the embodiments described above are realized by executing the loaded program, and in addition, the functions according to the present embodiment are realized by performing processing in conjunction with an operating system or other application programs, based on an instruction from the program.

Furthermore, in a case where the programs are distributed on the market, the programs, each of which is stored on a portable recording medium, can be distributed, or can be transferred to a server computer that is connected through a network, such as the Internet. In this case, a storage device of the server computer also falls within the scope of the present invention. Furthermore, some or all of the portions of each of the terminal device and the base station apparatus according to the embodiments, which are described above, may be realized as an LSI that is a typical integrated circuit. Each functional block of a reception device may be individually built into a chip, and some or all of the functional blocks may be integrated into a chip. In a case where each of the functional blocks is integrated into a circuit, an integrated circuit control unit is added that controls the functional blocks.

Furthermore, a technique for the integrated circuit is not limited to the LSI, and an integrated circuit for the functional block may be realized as a dedicated circuit or a general-purpose processor. Furthermore, if with advances in semiconductor technology, a circuit integration technology for a circuit with which an LSI is replaced will appear, it is also possible that an integrated circuit to which such a technology is applied is used.

Moreover, the invention in the present application is not limited to the embodiments described above. Furthermore, application of the terminal device according to the invention in the present application is not limited to a mobile station apparatus. It goes without saying that the terminal device can be applied to a stationary-type electronic apparatus that is installed indoors or outdoors, or a non-movable-type electronic apparatus, for example, an AV apparatus, a kitchen apparatus, a cleaning or washing machine, an air conditioner, office equipment, a vending machine, and other household apparatuses.

The embodiments of the present invention are described in detail above referring to the drawings, but specific configurations are not limited to the embodiments. A design and the like within a scope not departing from the gist of the present disclosure also fall within the scope of the claims.

Moreover, the present international application claims the benefits of Japanese Patent Application No. 2014-092348 filed on April 28, 2014, and the entire contents of Japanese Patent Application No. 2014-092348 are incorporated herein by reference.

### Industrial Applicability

The present invention is suitable for use in a terminal device and an integrated circuit.

### Reference Signs List

- 1A, 1B: BASE STATION APPARATUS
- 2A, 2B, 2C: TERMINAL DEVICE
- 101: HIGHER LAYER PROCESSING UNIT
- 102: CONTROL UNIT
- 103: TRANSMISSION UNIT
- 104: RECEPTION UNIT
- 105: TRANSMIT AND RECEIVE ANTENNA UNIT
- 1011: RADIO RESOURCE CONTROL UNIT
- 1012: SCHEDULING UNIT
- 1031: CODING UNIT
- 1032: MODULATION UNIT
- 1033: DOWNLINK REFERENCE SIGNAL GENERATION UNIT
- 1034: MULTIPLEXING UNIT
- 1035: WIRELESS TRANSMISSION UNIT
- 1041: WIRELESS RECEPTION UNIT
- 1042: DEMULTIPLEXING UNIT
- 1043: DEMODULATION UNIT
- 1044: DECODING UNIT
- 201: HIGHER LAYER PROCESSING UNIT
- 202: CONTROL UNIT
- 203: TRANSMISSION UNIT
- 204: RECEPTION UNIT
- 205: CHANNEL STATE INFORMATION GENERATION UNIT
- 206: TRANSMIT AND RECEIVE ANTENNA UNIT
- 2011: RADIO RESOURCE CONTROL UNIT
- 2012: SCHEDULING INFORMATION INTERPRETATION UNIT
- 2031: CODING UNIT
- 2032: MODULATION UNIT
- 2033: UPLINK REFERENCE SIGNAL GENERATION UNIT
- 2034: MULTIPLEXING UNIT
- 2035: WIRELESS TRANSMISSION UNIT
- 2041: WIRELESS RECEPTION UNIT
- 2042: DEMULTIPLEXING UNIT
- 2043: SIGNAL DETECTION UNIT

## Claims

1. A terminal device that communicates with a base station apparatus, the terminal device comprising:
a reception unit that assumes a first reference signal which corresponds to the base station apparatus and a second reference signal which is based on interference information that is configured by the base station apparatus;
a channel state information generation unit that generates first channel state information which is based on at least the first reference signal and second channel state information which is based on at least the second reference signal; and
a transmission unit that transmits the first channel state information and the second channel state information to the base station apparatus.

2. The terminal device according to claim 1,
wherein the transmission unit transmits the first channel state information and the second channel state information in the same subframe.

3. The terminal device according to claim 1,
wherein, in a case of a configuration in which a rank indicator is reported, the channel state information generation unit generates a first rank indicator as the first channel state information and a second rank indicator as the second channel state information, and generates a channel state report signal from the first rank indicator and the second rank indicator, and
wherein the transmission unit transmits the channel state report signal to the base station apparatus.

4. The terminal device according to claim 1,
wherein, in a case of a configuration in which a channel quality indicator is reported, the channel state information generation unit generates the channel quality indicator as the first channel state information, and generates a rank indicator as the second channel state information.

5. An integrated circuit that is built into a terminal device that communicates with a base station apparatus, the integrated circuit comprising:
reception means that receives a first reference signal which corresponds to the base station apparatus and a second reference signal which is based on interference information that is configured by the base station apparatus;
channel state information generation means that generates first channel state information which is based on at least the first reference signal and second channel state information which is based on at least the second reference signal; and
transmission means that transmits the first channel state information and the second channel state information to the base station apparatus.
